# EUROPÄISCHE PATENTANMELDUNG

(11) **EP 3 858 662 A1**
(43) Veröffentlichungstag der Anmeldung: **04.08.2021**
(21) Anmeldenummer: 21154919.1
(22) Anmeldetag: 03.02.2021
(51) Int. Cl.: B60N 2/28

(54) **KINDERSITZ**

(30) Priorität: 03.02.2020 DE 102020102636; 26.06.2020 DE 102020116926
(71) Anmelder: Osann GmbH, 78244 Gottmadingen (DE)
(72) Erfinder: Sklenarz, Johannes, 5505 Muehlbach am Hochkoenig (AT)
(74) Vertreter: Canzler & Bergmeier Patentanwälte Partnerschaft mbB

(57) **Zusammenfassung**

Die Erfindung betrifft einen Kindersitz (1) für ein Straßenfahrzeug mit zumindest einem Sitzkörper (2, 3, 4). Erfindungsgemäß ist zumindest ein Kern (7, 23) des zumindest einen Sitzkörpers (2, 3, 4) aus Kork ausgebildet.

## Beschreibung

Die vorliegende Erfindung betrifft einen Kindersitz für ein Straßenfahrzeug mit zumindest einem Sitzkörper.

Aus der DE 101 49 091 A1 ist ein Kindersitz bekannt, welcher im Wesentlichen aus Kunststoff ausgebildet ist. Nachteilig daran ist es, dass der Kindersitz, unter anderem aufgrund des verwendeten Kunststoffs, eine schlechte Ökobilanz aufweist.

Aufgabe der vorliegenden Erfindung ist es somit, den Nachteil des Stands der Technik zu beheben.

Die Aufgabe wird gelöst durch einen Kindersitz mit den Merkmalen des unabhängigen Patentanspruchs.

Vorgeschlagen wird ein Kindersitz für ein Straßenfahrzeug. Das Straßenfahrzeug kann ein Auto sein. Der Kindersitz dient in erster Linie dazu, ein Kind, ein Kleinkind oder ein Baby sicher im Straßenfahrzeug zu befördern, da das Kind selbst noch zu klein ist, vom Gurtsystem des Fahrzeugs gehalten zu werden. Der Kindersitz ist ein Autokindersitz. Der Kindersitz ist ein Straßenfahrzeugkindersitz.

Der Kindersitz umfasst ferner zumindest einen Sitzkörper. Der Sitzkörper kann dazu dienen, das Kind sitzend, lehnend und/oder liegend aufzunehmen. Das Kind sitzt, liegt und/oder lehnt auf, in und/oder an dem Sitzkörper. Der Kindersitz kann beispielsweise eine sogenannte Sitzerhöhung sein.

Erfindungsgemäß ist zumindest ein Kern des zumindest einen Sitzkörpers aus Kork ausgebildet. Kork ist ein natürlicher, nachwachsender Rohstoff, so dass die Ökobilanz des Kindersitzes verbessert wird. Außerdem ist die Entsorgung des Kindersitzes auf diese Weise wenig problematisch, da Kork gut verwittert und als Naturstoff der Umwelt nicht schadet. Durch Kork als nachwachsenden Rohstoff werden des Weiteren Ressourcen eingespart.

Vorteilhaft ist es, wenn zumindest ein Sitzkörper ein Sitzteil ist. Auf dem Sitzteil kann das Kind sitzen. Das Sitzteil kann die Gestalt einer Sitzerhöhung aufweisen.

Zusätzlich oder alternativ kann der zumindest eine Sitzkörper auch ein Rückenteil sein. Mit Hilfe des Rückenteils kann das sitzende Kind zusätzlich stabilisiert werden, was insbesondere für Kleinkinder und Babys vorteilhaft ist.

Zusätzlich oder alternativ kann der zumindest eine Sitzkörper auch ein Kopfteil sein. Mit Hilfe des Kopfteils wird der Kopf des Kindes stabilisiert bzw. geführt. Mittels des Kopfteils kann beispielsweise die Gefahr verhindert oder zumindest vermindert werden, dass bei einem Unfall der Hals- und Nackenbereich sowie der Kopf des Kindes verletzt wird.

Ferner kann das Sitzteil mit dem Rückenteil verbunden sein. Das Kopfteil kann außerdem mit dem Rückenteil verbunden sein.

Vorteilhafterweise können das Sitzteil, das Rückenteil und/oder das Kopfteil jeweils gegeneinander verschiebbar sein. Zusätzlich oder alternativ kann das Sitzteil, das Rückenteil und/oder das Kopfteil jeweils gegeneinander schwenkbar sein. Durch die daraus resultierende Möglichkeit, die Position und/oder die Orientierung des Sitzteils, des Rückenteils und/oder des Kopfteils zueinander zu ändern, kann auf verschiedene Körpergrößen des Kindes eingegangen werden. Der Kindersitz ist somit an die Körpergröße anpassbar. Zusätzlich oder alternativ kann der zumindest eine Sitzkörper auch eine Sitzschale sein. Sitzschalen werden eher für Kleinkinder oder Babys verwendet, in denen das Kleinkind oder Baby liegt.

Ferner kann der Kindersitz einen Griff und/oder Tragbügel aufweisen, mittels welchen der Kindersitz getragen werden kann. Das heißt, der Kindersitz kann auch derart ausgebildet sein, dass dieser aus dem Straßenfahrzeug entnehmbar ist, um das Kind im entnommenen Kindersitz zu tragen. Insbesondere die Sitzschalen weisen einen Tragbügel auf, um das Kleinkind oder Baby im Kindersitz tragen zu können.

Von Vorteil ist es, wenn der zumindest eine Sitzkörper zumindest eine Trägerstruktur aufweist, an dem der Kern aus Kork angeordnet ist. Die Trägerstruktur kann beispielsweise eine Trägerschicht sein. Die Trägerstruktur kann als Grundkörper dienen, an dem der Kern angeordnet ist. Die Trägerstruktur weist den Vorteil auf, dass es den Kern aus Kork stabilisiert, da der Kern aus Kork, in Abhängigkeit seiner Form, eine geringe Festigkeit aufweist. Zusätzlich oder alternativ kann die Trägerstruktur auch ein Trägergerüst sein.

Die Trägerstruktur kann beispielsweise aus Holz und/oder einem Holzfurnier ausgebildet sein. Dadurch ist ebenfalls ein umweltschonendes, nachwachsendes und gut entsorgbares Material verwendet. Holz und/oder das Holzfurnier weisen ferner eine höhere Festigkeit als Kork auf, so dass diese Materialien als Trägerstruktur dienen können. Die Trägerschicht kann aus Holz und/oder einem Holzfurnier ausgebildet sein.

Vorteilhaft ist es, wenn der Kern aus Kork aus zumindest einer Korkschicht ausgebildet ist. Wenn der Kern aus zumindest einer Korkschicht ausgebildet ist, kann der Kern einfacher geformt werden. Wenn das Rohmaterial des Kerns als Korkschicht vorliegt, kann daraus der zumindest eine Sitzkörper leicht geformt werden. Die Korkschicht als Rohmaterial ist zumeist plan bzw. eben. Der Sitzkörper und somit der Kern aus Kork ist jedoch zumindest abschnittsweise gekrümmt. So weist beispielsweise eine Sitzfläche eine Krümmung auf, da dies für das Kind bequemer ist. Als Korkschicht kann der Kern der Krümmung angepasst werden. Beispielsweise kann die Korkschicht als Rohmaterial leichter gebogen werden. In diesem Hinblick ist es auch vorteilhaft, wenn die Trägerstruktur die Trägerschicht ist, welche aus Holz und/oder Holzfurnier sein kann. Die Trägerschicht kann ebenso im Rohzustand als ebene Trägerschicht vorliegen, welche derart gebogen bzw. gekrümmt werden muss, so dass die Form des Sitzkörpers ausgebildet wird. Dies kann beispielsweise so erfolgen, dass die Trägerschicht angefeuchtet wird, beispielsweise mit heißem Wasserdampf, , so dass diese biegbar wird. Die Trägerschicht wird in Form gebracht und wieder getrocknet, so dass eine Form bzw. zumindest eine Grundform des Sitzkörpers erhalten wird. Danach kann die Korkschicht aufgelegt werden. Bei mehreren Korkschichten können die Korkschichten schichtweise angeordnet werden. Dadurch wird verhindert, dass übermäßig viel Kork zur Formung des Sitzkörpers entfernt werden muss. Auch die zumindest eine Korkschicht kann mittels heißem Wasserdampf oder lediglich Wasser angefeuchtet werden, so dass die Schicht formbar wird.

Die zumindest eine Korkschicht ist an der Trägerstruktur angeordnet. Ferner kann die zumindest eine Korkschicht einseitig oder beidseitig an der Trägerschicht angeordnet sein.

Vorteilhaft ist es, wenn der Kern aus Kork, insbesondere zumindest eine Korkschicht, der Sitzfläche für das Kind zugewandt ist. Aufgrund der geringen Festigkeit des Korks sitzt das Kind relativ weich.

Von Vorteil ist es, wenn der zumindest eine Sitzkörper, insbesondere das Sitzteil, das Rückenteil und/oder das Kopfteil ein Vollmaterial ist. Dabei können auch die zumindest eine Korkschicht und/oder die zumindest eine Trägerstruktur, insbesondere die zumindest eine Trägerschicht, das Vollmaterial bilden. Dabei ist der Kork das Vollmaterial. Der Kern des Sitzkörpers ist somit ein Kork-Vollmaterial. Dadurch weist der zumindest eine Sitzkörper eine ausreichende Festigkeit auf, um das Kind aufzunehmen. Der Kork ist des Weiteren insbesondere zusammenhängend und somit nicht lose. Insbesondere ist der Kern aus dem Kork zusammenhängend.

Der Kern aus Kork kann ferner massiv ausgebildet sein. Der Kern ist somit massiv aus Kork ausgebildet. Das Korkmaterial, aus dem der Kern und/oder die Korkschichten ausgebildet sind, ist zusammenhängend, massiv und/oder einteilig.

Von Vorteil ist es, wenn eine Innenseite des Kindersitzes zumindest teilweise mit einer Sitzschicht verkleidet ist. Die Sitzschicht kann aus Kork sein. Die Innenseite des Kindersitzes ist ferner dem Kind zugewandt, wenn es im Kindersitz sitzt. Mit Hilfe der Sitzschicht kann das Kind bequem sitzen.

Vorteilhaft ist es zusätzlich oder alternativ, wenn eine Außenseite des Kindersitzes zumindest abschnittsweise mit einer Außenschicht verkleidet ist. Die Außenschicht kann ebenfalls aus Holz und/oder Holzfurnier ausgebildet sein. Die Außenfläche ist dabei die Fläche, welche auf der zu der zumindest einen Sitzfläche bzw. zur Innenseite abgewandten Seite des Kindersitzes angeordnet ist. Die Sitzfläche ist insbesondere die Fläche, welche mit dem Kind in Kontakt kommt, wenn das Kind im Kindersitz sitzt. Wenn die Außenschicht auf der Außenfläche bzw. der Außenseite angeordnet ist, wird das Kork des Kerns vor Beschädigung geschützt.

Von Vorteil ist es, wenn die Außenschicht eine Dicke von 0,5 mm bis 3 mm aufweist. Zusätzlich oder alternativ kann die zumindest eine Korkschicht eine Dicke von 3 mm bis 20 mm aufweisen. Zusätzlich oder alternativ kann die zumindest eine Trägerschicht eine Dicke von 1 mm bis 4 mm aufweisen. Bei derartigen Dicken kann der Kindersitz gut verarbeitet werden. Ferner wird das Gewicht des Kindersitzes nicht zu hoch.

Vorteilhaft ist es, wenn die Außenfläche des Kindersitzes zumindest abschnittsweise mit einer Versiegelung versiegelt ist. Die Außenfläche ist die vollständige nach außen gewandte Oberfläche des Kindersitzes. Insbesondere bilden die Innenseite und die Außenseite zumindest teilweise die Außenfläche. Die Versiegelung kann beispielsweise ein Wachs sein. Zusätzlich oder alternativ kann die Versiegelung ein Fett sein. Eine derartige Versiegelung ist wieder umweltschonend, da keine umweltschädlichen Chemikalien eingesetzt werden. Ferner ist Wachs und/oder Fett wasserabweisend, so dass der Kindersitz keine bzw. kaum Feuchtigkeit aufnimmt. Ferner kann der Kindersitz durch die Versiegelung gut gereinigt werden. Vorteilhaft ist es, wenn die Versiegelung zumindest auf der Außenseite und/oder Innenseite bzw. Außenfläche des Kindersitzes angeordnet ist. Die Versiegelung kann auch lediglich auf der Außenseite bzw. der Außenfläche angeordnet sein. Insbesondere ist die Versiegelung auf der Innenseite, also vorzugsweise die Sitzflächen und/oder Rückenflächen, vorteilhaft, da dort das Kind in Kontakt mit dem Kindersitz kommt und somit die Verschmutzung dort am größten ist.

Von Vorteil ist es, wenn der Kindersitz zumindest ein Absorptionselement aufweist. Das Absorptionselement dient dazu, Energie bei einem Unfall aufzunehmen, um so das Kind zu schützen. Das Absorptionselement ist somit ein Energieabsorptionselement. Mit Hilfe des Absorptionselements können die Beschleunigungen gedämpft werden, welche bei dem Unfall auftreten. Ferner kann das Absorptionselement als zusätzliche Knautschzone dienen, wenn beispielsweise ein anderes Fahrzeug in die Seite des Fahrzeugs mit dem Kindersitz fährt, wobei das Absorptionselement dabei ebenfalls Energie aufnimmt.

Das Absorptionselement kann dabei an dem zumindest einen Sitzkörper angeordnet sein. Das Absorptionselement ist somit auf dem Sitzkörper angeordnet. Das Absorptionselement kann beispielsweise an der Außenseite angeordnet sein.

Zusätzlich oder alternativ kann der zumindest eine Sitzkörper zumindest bereichsweise aus dem zumindest einen Absorptionselement ausgebildet sein. Beispielsweise kann das Absorptionselement somit in dem Sitzkörper angeordnet sein und ist ein Teil von dem Sitzkörper.

Zusätzlich oder alternativ kann das Absorptionselement in dem zumindest einem Sitzkörper integriert sein.

Vorteilhafterweise ist das Absorptionselement an der Seite des Kindersitzes angeordnet, um seitliche Aufprälle und Unfälle zu dämpfen.

Von Vorteil ist es, wenn das zumindest eine Absorptionselement eine Gitterstruktur aufweist. Mittels der Gitterstruktur weist das Absorptionselement Hohlräume und Verstrebungen auf, so dass das Absorptionselement mit der Gitterstruktur gut Energie aufnehmen kann. Das Absorptionselement weist ferner Gitterpunkte oder Vernetzungspunkte auf, an dem die Verstrebungen miteinander verbunden sind. Zusätzlich oder alternativ weist das zumindest eine Absorptionselement zumindest eine Absorptionsschicht auf, welche ebenfalls die Gitter-, eine Netz- oder eine Wabenstruktur aufweisen kann. Mit Hilfe der Gitter-, der Netz- oder der Wabenstruktur kann Gewicht eingespart werden, wobei die Absorptionsfähigkeit des Absorptionselements trotzdem hoch ist.

Das zumindest eine Absorptionselement, insbesondere die zumindest eine Absorptionsschicht, kann auch eine Netzstruktur aufweisen, so dass Hohlräume und Verstrebungen vorhanden sind. Außerdem weist das Absorptionselement Vernetzungspunkte auf, an denen die Verstrebungen verbunden sind.

Das zumindest eine Absorptionselement, insbesondere die zumindest eine Absorptionsschicht, kann auch eine Wabenstruktur aufweisen. Die Wabenstruktur kann ferner die regelmäßige Struktur auf regelmäßigen Sechsecken aufweisen. Zusätzlich oder alternativ kann die Wabenstruktur auch eine regelmäßige und/oder unregelmäßige Struktur aus regelmäßigen und/oder unregelmäßigen Polygonen aufweisen. Die Struktur kann auch gewellt sein - ähnlich einer Wellpappe.

Vorteilhaft ist es, wenn mehrere Absorptionsschichten übereinander angeordnet sind. Das Absorptionselement umfasst somit mehrere Absorptionsschichten. Dabei können die jeweiligen übereinander angeordneten Absorptionsschichten zueinander versetzt angeordnet sind. Alternativ können die übereinander angeordneten Absorptionsschichten auch deckungsgleich übereinander angeordnet sein.

Sind die jeweiligen übereinander angeordneten Absorptionsschichten zueinander versetzt angeordnet, kann über einem Hohlraum einer Absorptionsschicht ein Knoten, ein Gitterpunkt bzw. ein Vernetzungspunkt einer darüber (oder darunter) liegenden Absorptionsschicht angeordnet sein. Das Absorptionselement kann damit Energie absorbieren, indem sich die jeweiligen Absorptionsschichten ineinanderschieben. Dies erfolgt derart, dass sich ein Knoten, ein Gitterpunkt bzw. ein Vernetzungspunkt einer Absorptionsschicht in den Hohlraum einer darüber und/oder darunter liegenden Absorptionsschicht schiebt. Dabei komprimiert sich das Absorptionselement, was eine zusätzliche Knautschzone bildet. Zwar kann das Absorptionselement dabei zerstört werden, was jedoch in Hinblick auf die Sicherheit in Kauf genommen wird.

Das zumindest eine Absorptionselement und/oder die zumindest eine Absorptionsschicht können ferner aus einem Schaumstoff und/oder Kork ausgebildet sein. Die zumindest eine Absorptionsschicht kann ferner aus einem plattenförmigen Schaumstoff und/oder Kork ausgestanzt sein, so dass die Gitterstruktur bzw. die Netzstruktur ausgebildet wird.

Von Vorteil ist es, wenn das Absorptionselement, insbesondere die zumindest eine Absorptionsschicht, an einer ersten und/oder zweiten Seite eine Stabilisierungsschicht aufweist. Dadurch kann das Absorptionselement und insbesondere die zumindest eine Absorptionsschicht stabilisiert werden. Insbesondere wenn das Absorptionselement aus einem Schaumstoff ausgebildet ist, ist die zumindest eine Stabilisierungsschicht vorteilhaft. Die zumindest eine Stabilisierungsschicht und die zumindest eine Absorptionsschicht können ein Sandwichbauteil bilden. Die zumindest eine Stabilisierungsschicht kann ferner aus Holz und/oder Holzfurnier ausgebildet sein.

Vorteilhaft ist es, wenn der Kindersitz an der Außenseite und/oder an der Innenseite zumindest eine Lüftungsöffnung aufweist. Die zumindest eine Lüftungsöffnung kann somit an der Außenseite und/oder Innenseite des Kindersitzes angeordnet sein. Dabei kann die zumindest eine Lüftungsöffnung zumindest im Bereich des zumindest einen Absorptionselements, wenn das Absorptionselement im Sitzkörper angeordnet ist, angeordnet sein. Wenn das Absorptionselement die zumindest eine Absorptionsschicht aus der Gitter- bzw. Netzstruktur aufweist, weist die Absorptionsschicht auch die Hohlräume auf, welche das Durchströmen von Luft ermöglichen. Die Luft kann ferner durch die zumindest eine Lüftungsöffnung in die Hohlräume der zumindest einen Absorptionsschicht ein- und/oder austreten. Die Luft tritt somit an einer Lüftungsöffnung ein, durchströmt mit Hilfe des Absorptionselements den Sitzkörper und tritt wieder an einer Lüftungsöffnung aus.

Von Vorteil ist es, wenn der Kindersitz ein Befestigungsmittel aufweist, mittels dem der zumindest eine Sitzkörper im Straßenfahrzeug befestigt werden kann. Das Befestigungsmittel kann ein Adapter sein, mittels dem der Kindersitz im Fahrzeug angeordnet werden kann. Ein Teil des Befestigungsmittels verbleibt dabei im Fahrzeug, wenn der Kindersitz entnommen wird, wohingegen ein weiterer Teil am Kindersitz angeordnet ist.

Vorteilhaft ist es, wenn der zumindest eine Sitzkörper gegenüber dem Befestigungsmittel drehbar ist. Dadurch kann das Kind in Fahrtrichtung oder gegen die Fahrtrichtung gesetzt werden. Zusätzlich oder alternativ kann der zumindest eine Sitzkörper von dem Befestigungsmittel entkoppelbar sein. Dadurch kann das Kind im Sitzkörper getragen werden. Ferner kann weiterhin der Sitzkörper bzw. der Kindersitz auch auf einem Kinderwagen bzw. einem Gestell eines Kinderwagens angeordnet werden.

Weitere Vorteile der Erfindung sind in den nachfolgenden Ausführungsbeispielen beschrieben. Es zeigen:
- **Figur 1**: eine seitliche Schnittansicht eines Kindersitzes,
- **Figur 2**: eine seitliche Schnittansicht eines Sitzteils,
- **Figur 3**: eine seitliche Schnittansicht eines Rückenteils,
- **Figur 4**: eine Schnittansicht eines Absorptionselements,
- **Figur 5**: eine Schnittansicht mehrerer übereinander angeordneter Absorptionselementen in Draufsicht,
- **Figur 6**: eine Schnittansicht mehrerer übereinander angeordneter Absorptionselementen in Seitenansicht,
- **Figur 7**: eine perspektivische Ansicht eines Kindersitzes mit Absorptionselem enten,
- **Figur 8**: eine Rückansicht des Kindersitzes 1 und die Schiebeverbindung und
- **Figur 9**: eine Schnittansicht des Kindersitzes mit einer Lüftung.

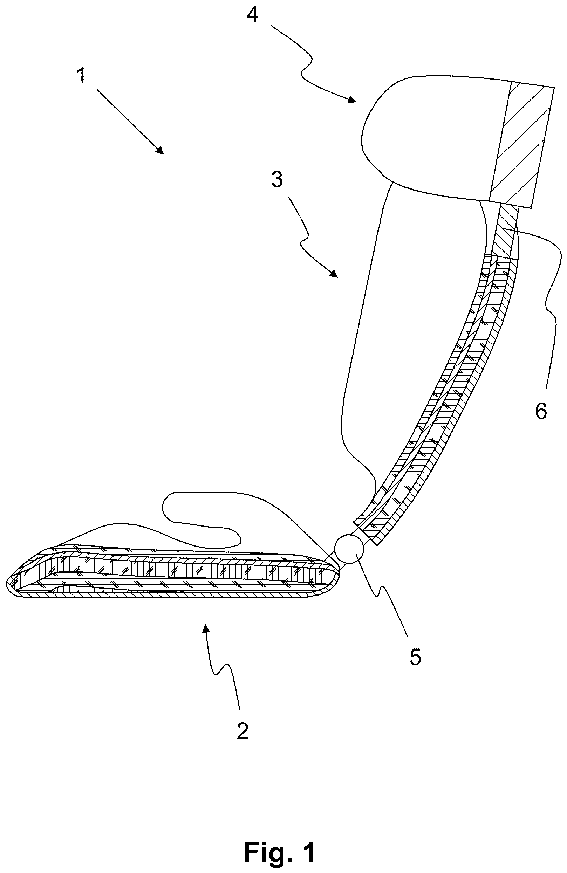

Figur 1 zeigt eine seitliche Schnittansicht eines Kindersitzes 1 für ein Straßenfahrzeug. Der Kindersitz 1 wird dazu verwendet, ein Kleinkind, ein Kind oder ein Baby sicher im Straßenfahrzeug zu befördern. Gerade Kleinkinder und Babys sind zu klein, um vom Gurtsystem des Straßenfahrzeugs sicher gehalten zu werden. Der Kindersitz 1 kann ein für Kleinkinder oder Babys passendes Gurtsystem aufweisen. Das Gurtsystem des Kindersitzes 1 ist hier nicht gezeigt. Der Kindersitz 1 kann vom Gurtsystem des Straßenfahrzeugs im Straßenfahrzeug fixiert werden. Der Kindersitz 1 weist des Weiteren zumindest einen Sitzkörper 2, 3, 4 auf. Gemäß dem vorliegenden Ausführungsbeispiel weist der Kindersitz 1 als Sitzkörper 2, 3, 4 ein Sitzteil 2, ein Rückenteil 3 und ein Kopfteil 4 auf. Beispielsweise weist der Kindersitz 1 zumindest das Sitzteil 2 auf.

Figur 1 zeigt ferner den Kindersitz 1 in einer Schnittansicht. Insbesondere ist im vorliegenden Ausführungsbeispiel das Sitzteil 2 und das Rückenteil 3 schichtweise aufgebaut. Zusätzlich kann auch das Kopfteil 4 gemäß dem Sitzteil 2 und dem Rückenteil 3 ausgebildet sein. Der Einfachheit halber ist das Kopfteil 4 nicht so gezeigt, kann jedoch wie das Sitzteil 2 und/oder das Rückenteil 3 ausgebildet sein.

Gemäß dem vorliegenden Ausführungsbeispiel ist zwischen dem Sitzteil 2 und dem Rückenteil 3 eine Gelenkverbindung 5 angeordnet, so dass das Rückenteil 3 gegenüber dem Sitzteil 2 schwenkbar ist. Ferner kann eine Gelenkverbindung auch zwischen Rückenteil 3 und Kopfteil 4 angeordnet sein.

Im hier gezeigten Ausführungsbeispiel ist zwischen dem Rückenteil 3 und dem Kopfteil 4 eine Schiebeverbindung 6 angeordnet. Dadurch kann das Kopfteil 4 gegenüber dem Rückenteil 3 verschoben werden, so dass auf unterschiedliche Größen des Kindes eingegangen werden kann.

Die Gelenkverbindung 5 und/oder die Schiebeverbindung 6 können vorteilhafterweise fixierbar bzw. verrastbar sein.

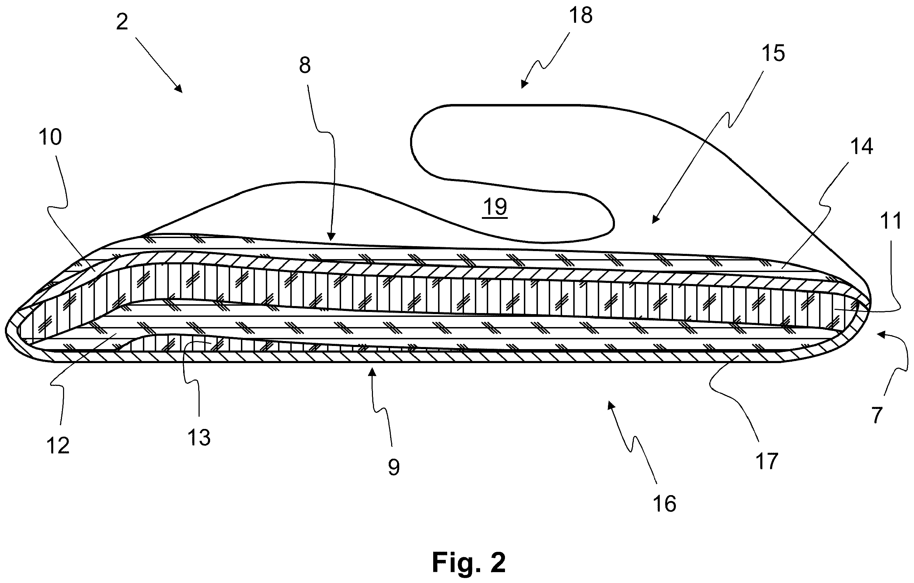

Figur 2 zeigt das Sitzteil 2 in seitlicher Schnittansicht. Das Sitzteil 2 ist im Kindersitz 1 in Figur 1 gezeigt. Merkmale, welche bereits in der vorgegangenen Figur beschrieben sind, werden der Einfachheit halber nicht nochmals erklärt. Ferner können Merkmale auch erst in nachfolgenden Figuren beschrieben werden. Des Weiteren werden der Einfachheit halber für gleiche Merkmal gleiche Bezugszeichen verwendet. Außerdem können der Übersichtlichkeit halber nicht mehr alle Merkmale in den folgenden Figuren gezeigt sein. Es können jedoch in einer oder mehreren der vorangegangenen Figuren gezeigte Merkmale auch in einer oder mehreren der nachfolgenden Figuren vorhanden sein. Ferner können der Übersichtlichkeit halber Merkmale auch erst in einer oder mehreren der nachfolgenden Figuren gezeigt sein. Nichtsdestotrotz können Merkmale, welche erst in einer oder mehreren der nachfolgenden Figuren gezeigt sind, auch bereits in einer vorangegangenen Figur vorhanden sein.

Das hier gezeigte Sitzteil 2 weist eine Sitzfläche 8 auf, auf welcher das Kind sitzen kann.

Zwischen der Sitzfläche 8 und der Unterseite 9 ist ein Kern 7 des zumindest Sitzkörpers 2, hier des Sitzteils 2, angeordnet. Der Kern 7 des zumindest einen Sitzkörpers 2 ist aus Kork ausgebildet.

Üblich ist, dass Kindersitze 1 aus Kunststoff sind. Derartige Kindersitze 1 aus Kunststoff weisen jedoch eine schlechte Ökobilanz auf, da bei der Herstellung Öl verwendet wird und die Kindersitze 1 aufwendig entsorgt werden müssen.

Mit einem Kindersitz 1, dessen zumindest einer Sitzkörper 2, 3, 4 einen Kern 7 aus Kork aufweist, wird die Ökobilanz verbessert.

Wie im vorliegenden Ausführungsbeispiel gezeigt ist, ist das hier gezeigte Sitzteil 2 ein Vollmaterial, wobei auch der Kern 7 aus Kork ein Vollmaterial ist bzw. bildet.

Gemäß dem vorliegenden Ausführungsbeispiel weist der hier gezeigte Sitzkörper 2, welcher als Sitzteil 2 ausgebildet ist, zumindest eine Trägerschicht 10 auf. Die Trägerschicht 10 kann aus Holz und/oder Holzfurnier ausgebildet sein. Die Trägerschicht 10 dient ferner als Träger für den Kern 7 aus Kork, da Kork selbst eine geringe Festigkeit aufweist, wobei die Festigkeit von der Geometrie des Kerns 7 abhängt.

Gemäß dem vorliegenden Ausführungsbeispiel wird an der Trägerschicht 10 zumindest eine Korkschicht 11, 12, 13 angeordnet. Da der Kern 7 infolgedessen aus der zumindest einen Korkschicht 11, 12, 13 ausgebildet wird, ist die Trägerschicht 10 vorteilhaft, da Kork in Schichtform leicht reißt oder bricht.

Gemäß dem vorliegenden Ausführungsbeispiel ist der Kern 7 aus drei Korkschichten 11, 12, 13 ausgebildet. Wie viele Korkschichten 11, 12, 13 verwendet werden, hängt natürlich davon ab, wie dick der Kern 7 und wie dick die Korkschichten 11, 12, 13 sind.

Die Korkschichten 11, 12, 13 erstrecken sich im vorliegenden Ausführungsbeispiel von der Trägerschicht 10 in Richtung der Unterseite 9 des Sitzteils 2. An der Trägerschicht 10 ist die erste Korkschicht 11 angeordnet. Darauf ist die zweite Korkschicht 12 angeordnet. Wiederum darauf ist die dritte Korkschicht 13 angeordnet.

Die Korkschichten 11, 12, 13 sowie die Trägerschicht 10 können miteinander verklebt werden.

Gemäß dem vorliegenden Ausführungsbeispiel weist der hier gezeigte Sitzkörper 2 eine Sitzschicht 14 auf. Die Sitzschicht 14 ist so angeordnet, dass diese die Sitzfläche 8 bildet. Die Sitzschicht 14 kann auch aus Kork ausgebildet sein, so dass das Kind weich sitzt. Die Sitzschicht 14 ist hier ebenfalls aus zumindest einer Schicht aus Kork ausgebildet. Es können auch mehrere Schichten aus Kork übereinander angeordnet sein. Die Sitzschicht 14 ist hier ferner auf der Trägerschicht 10 angeordnet.

Der Kindersitz 1 weist ferner eine Innenseite 15 auf, welche dem Kind zugewandt ist, wenn es im Kindersitz 1 sitzt. Ferner weist der Kindersitz 1 eine Außenseite 16 auf, welche vom Kind abgewandt ist, wenn es im Kindersitz 1 sitzt.

Die Sitzfläche 8 ist an der Innenseite 15 und die Unterseite 9 an der Außenseite 16 angeordnet.

Gemäß dem vorliegenden Ausführungsbeispiel weist der hier gezeigte Sitzkörper 2 eine Außenschicht 17 auf. Die Außenschicht 17 ist auf dem Kern 7 aus Kork angeordnet. Die Außenschicht 17 ist ferner an der Außenseite 16 angeordnet. Die Außenschicht 17 kann ferner aus Holz und/oder einem Holzfurnier sein. Mittels der Außenschicht 17 wird die Beschädigung insbesondere des Kerns 7 aus Kork verhindert. Die Außenschicht 17 ist ferner an der Unterseite 9 angeordnet und ist deswegen von Vorteil, weil der Kindersitz 1 an der Unterseite 9 auf dem Boden abgestellt wird, so dass es gut ist, wenn die Unterseite 9 stabil ausgebildet ist.

Wie im vorliegenden Ausführungsbeispiel gezeigt ist, sind zumindest die Korkschichten 11, 12, 13, die Trägerschicht 10, Außenschicht 17 sowie die Sitzschicht 14 gekrümmt. Dadurch kann der hier gezeigte Sitzkörper 2 die entsprechende Kontur erhalten, welche derart angepasst ist, dass Kinder bequem darin sitzen können. Die entsprechenden Schichten können beispielsweise mittels Feuchtigkeit oder heißem Dampf gebogen, gekrümmt und/oder in Form gepresst werden. Nach dem Trocknen behalten die Schichten die Form.

Ferner weist das hier gezeigte Sitzteil 2 zwei Seitenführungen 18 auf, wobei in dieser Schnittansicht lediglich eine Seitenführung 18 zu sehen ist. Die Seitenführungen 18 sind seitlich am Sitzteil 2 angeordnet, um zu verhindern, dass das Kind seitlich vom Sitzteil 2 rutscht.

In den Seitenführungen 18 können Aussparungen 19 angeordnet sein, durch die ein Sicherheitsgurt des Straßenfahrzeugs durchgeführt werden kann, um das Kind bzw. das Sitzteil 2 bzw. den Kindersitz 1 mit Hilfe des Sicherheitsgurtes mit dem Straßenfahrzeug zu verbinden.

Des Weiteren kann eine Außenfläche des zumindest einen Sitzkörpers 2, hier das Sitzteil 2, mittels einer hier nicht gezeigten Versiegelung versiegelt sein. Insbesondere kann die Sitzschicht 14 und/oder die Außenschicht 17 mittels der Versiegelung versiegelt sein. Die Versiegelung kann beispielsweise Wachs, ein Lack oder ein Fett sein. Dadurch wird beispielsweise die Sitzschicht 14 wasserabweisend bzw. Wasser dringt nicht in die Sitzschicht 14 ein. Ferner kann damit die Sitzfläche 8 besser gereinigt werden.

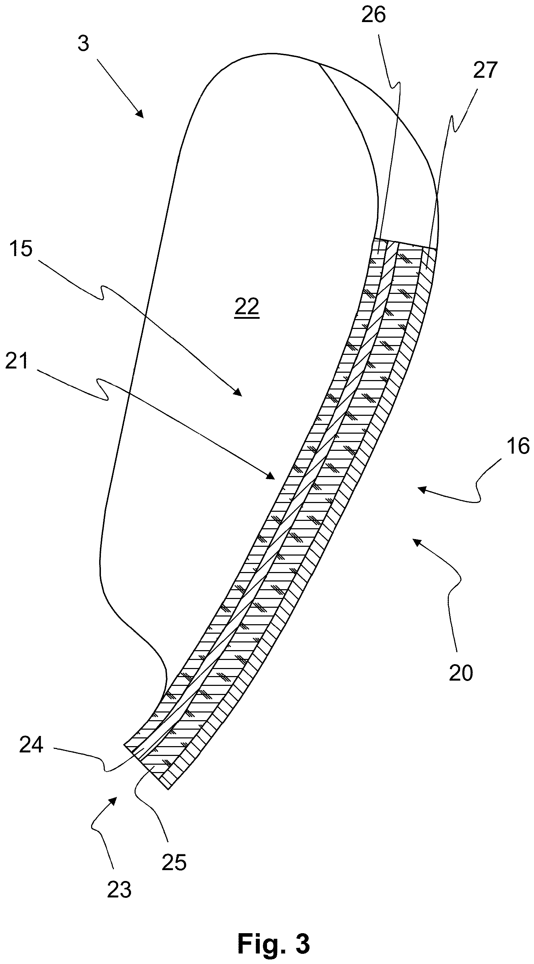

Figur 3 zeigt eine seitliche Schnittansicht eines weiteren Sitzkörpers 3, nämlich des Rückenteils 3. Der Rückenteil 3 ist am Kindersitz 1 in Figur 1 gezeigt. Merkmale, welche bereits in der vorgegangenen Figur beschrieben sind, werden der Einfachheit halber nicht nochmals erklärt. Ferner können Merkmale auch erst in nachfolgenden Figuren beschrieben werden. Des Weiteren werden der Einfachheit halber für gleiche Merkmal gleiche Bezugszeichen verwendet. Außerdem können der Übersichtlichkeit halber nicht mehr alle Merkmale in den folgenden Figuren gezeigt sein. Es können jedoch in einer oder mehreren der vorangegangenen Figuren gezeigte Merkmale auch in einer oder mehreren der nachfolgenden Figuren vorhanden sein. Ferner können der Übersichtlichkeit halber Merkmale auch erst in einer oder mehreren der nachfolgenden Figuren gezeigt sein. Nichtsdestotrotz können Merkmale, welche erst in einer oder mehreren der nachfolgenden Figuren gezeigt sind, auch bereits in einer vorangegangenen Figur vorhanden sein.

Das Rückenteil 3 als Sitzkörper 3 weist eine Rückseite 20 auf, welche, wenn der Kindersitz 1 im Straßenfahrzeug angeordnet ist, einer Rückenlehne des Autositzes zugewandt ist. Ferner ist die Rückseite 20 von Kind abgewandt, wenn es im Kindersitz 1 sitzt. Ferner weist auch das Rückenteil 3 die Außenseite 16 und die Innenseite 15 auf, da der Kindersitz 1 die dem Kind zugewandte Innenseite 15 und die dem Kind abgewandte Außenseite 16 aufweist.

Auf der zur Rückseite 20 abgewandten Seite und somit dem Kind zugewandt, wenn es im Kindersitz 1 sitzt, ist einer Rückenfläche 21 angeordnet. An der Rückenfläche 21 kann sich das Kind anlehnen, wohingegen das Kind auf der Sitzfläche 8 des Sitzteils 2 der Figur 2 sitzt.

Der Aufbau des Rückenteils 3 ist zumindest ähnlich zum Aufbau des Sitzteils 2 der Figur 1. Beispielsweise kann das Rückenteil 3 eine andere Anzahl an Schichten aufweisen als das Sitzteil 2.

Das Rückenteil 3 weist gemäß dem vorliegenden Ausführungsbeispiel ebenfalls einen Kern 23 aus Kork auf.

Das Rückenteil 3 kann, wie in Figur 2 zum Sitzteil 2 gezeigt ist, ebenfalls eine Trägerschicht 24 aufweisen, um den Kern 23 daran anordnen zu können.

Das Rückenteil 3 weist ferner eine Korkschicht 25 auf, welche auf der Trägerschicht 24 angeordnet ist.

Des Weiteren weist das Rückenteil 3 eine Rückenschicht 26 auf, welche aus Kork sein kann, so dass sich das Kind weich und bequem anlehnen kann.

Außerdem weist das Rückenteil 3 ebenfalls zwei Seitenführungen 22 auf, wobei lediglich eine Seitenführung 22 in dieser Schnittansicht gezeigt ist. Auch diese Seitenführungen 22 dienen dazu, dass das Kind im Kindersitz 1 gehalten wird.

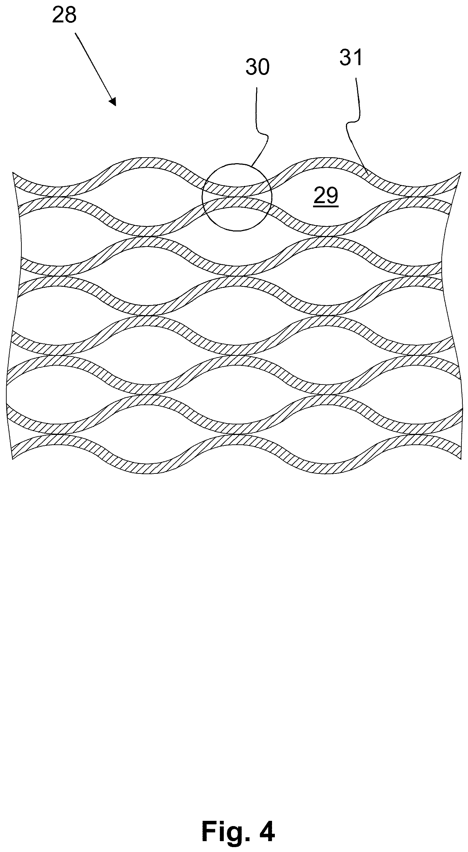

Figur 4 zeigt einen Ausschnitt einer Schnittansicht eines Absorptionselements, welches hier als Absorptionsschicht 28 ausgebildet ist. Die Absorptionsschicht 28 weist gemäß dem vorliegenden Ausführungsbeispiel eine Gitterstruktur, Netzstruktur oder Wabenstruktur auf. Merkmale, welche bereits in der vorgegangenen Figur beschrieben sind, werden der Einfachheit halber nicht nochmals erklärt. Ferner können Merkmale auch erst in nachfolgenden Figuren beschrieben werden. Des Weiteren werden der Einfachheit halber für gleiche Merkmal gleiche Bezugszeichen verwendet. Außerdem können der Übersichtlichkeit halber nicht mehr alle Merkmale in den folgenden Figuren gezeigt sein. Es können jedoch in einer oder mehreren der vorangegangenen Figuren gezeigte Merkmale auch in einer oder mehreren der nachfolgenden Figuren vorhanden sein. Ferner können der Übersichtlichkeit halber Merkmale auch erst in einer oder mehreren der nachfolgenden Figuren gezeigt sein. Nichtsdestotrotz können Merkmale, welche erst in einer oder mehreren der nachfolgenden Figuren gezeigt sind, auch bereits in einer vorangegangenen Figur vorhanden sein.

Die Absorptionsschicht 28 weist aufgrund der Gitter-, Netz- oder Wabenstruktur Hohlräume 29 und Vernetzungspunkte 30 auf. Die Vernetzungspunkte 30 können auch als Gitterpunkte oder Knoten bezeichnet werden. Die Absorptionsschicht 28 weist ferner Stützelemente 31 auf. Der Einfachheit halber ist lediglich ein Hohlraum 29, ein Vernetzungspunkt 30 und ein Stützelement 31 mit einem Bezugszeichen versehen.

An den Vernetzungspunkten 30 treffen zwei benachbarte Stützelemente 31 aufeinander und weisen am entsprechenden Vernetzungspunkt 30 eine Verbindung auf. Die Verbindung kann beispielsweise stoffschlüssig sein. An den Vernetzungspunkten 30 können die Stützelemente 31 beispielsweise miteinander verklebt sein. Alternativ kann die Absorptionsschicht 28 aus einem flächigen Vollmaterial ausgestanzt sein. Insbesondere werden dabei die Hohlräume 29 ausgestanzt.

Im Bereich der Hohlräume 29 sind die jeweiligen zueinander benachbarten Stützelemente 31 voneinander beabstandet.

Die Stützelemente 31 sind im vorliegenden Ausführungsbeispiel wellig ausgebildet. Zusätzlich oder alternativ können die Stützelemente 31 auch dreiecksförmig, d.h. zick-zack-förmig, und/oder sägezahnförmig ausgebildet sein.

Ferner können die Stützelemente 31 eine regelmäßige und/oder unregelmäßige Form aufweisen. Beispielsweise können die Stützelemente 31 derart ausgebildet sein, dass die Hohlräume 29 ein regelmäßiges Sechseck ausbilden, so dass die bekannte (Bienen-)Wabenstruktur ausgebildet wird.

Des Weiteren können die Stützelemente 31 auch gestreckt und/oder gestaucht sein. Dies kann in einer Längsrichtung und/oder einer Querrichtung der Stützelemente 31 ausgebildet sein.

Mittels einer derartigen Absorptionsschicht 28 wird zum einen Gewicht eingespart sowie die Fähigkeit verbessert, dass das daraus gebildete Absorptionselement Energie aufnehmen kann.

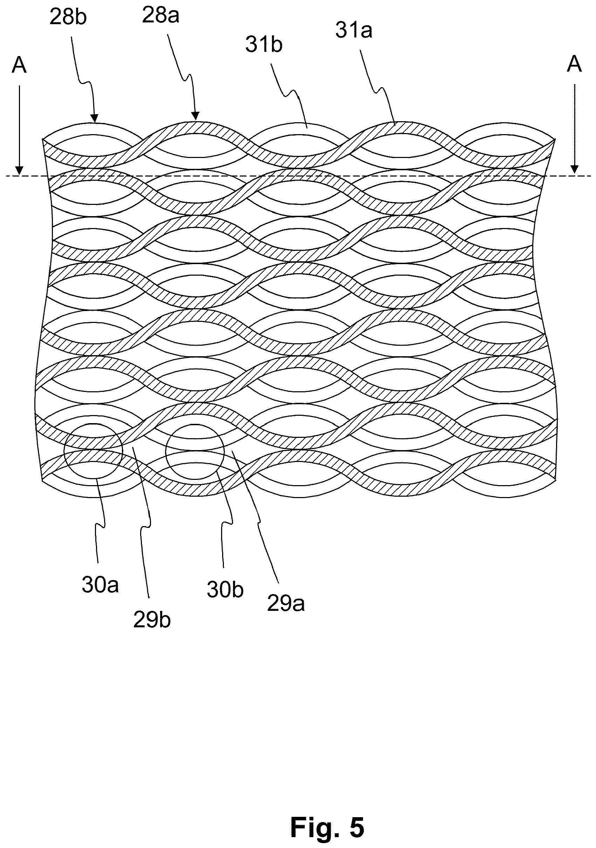

Figur 5 zeigt eine Schnittansicht des Absorptionselements mit zwei Absorptionsschichten 28a, 28b. Merkmale, welche bereits in der vorgegangenen Figur beschrieben sind, werden der Einfachheit halber nicht nochmals erklärt. Ferner können Merkmale auch erst in nachfolgenden Figuren beschrieben werden. Des Weiteren werden der Einfachheit halber für gleiche Merkmal gleiche Bezugszeichen verwendet. Außerdem können der Übersichtlichkeit halber nicht mehr alle Merkmale in den folgenden Figuren gezeigt sein. Es können jedoch in einer oder mehreren der vorangegangenen Figuren gezeigte Merkmale auch in einer oder mehreren der nachfolgenden Figuren vorhanden sein. Ferner können der Übersichtlichkeit halber Merkmale auch erst in einer oder mehreren der nachfolgenden Figuren gezeigt sein. Nichtsdestotrotz können Merkmale, welche erst in einer oder mehreren der nachfolgenden Figuren gezeigt sind, auch bereits in einer vorangegangenen Figur vorhanden sein. Insbesondere sind die Merkmale der Absorptionsschichten 28a, 28b anhand der Absorptionsschicht 28 der Figur 4 erläutert.

Die beiden Absorptionsschichten 28a, 28b sind übereinander angeordnet. Figur 5 zeigt weiterhin die erste Absorptionsschicht 28a in der Schnittansicht, welche in die Ansicht die obere der beiden Absorptionsschichten 28a, 28b ist. Die zweite Absorptionsschicht 28b liegt unter der ersten Absorptionsschicht 28a und ist nicht geschnitten dargestellt. Die beiden hier gezeigten Absorptionsschichten 28a, 28b sind zueinander parallel.

Des Weiteren sind die beiden Absorptionsschichten 28a, 28b zueinander versetzt angeordnet. Die beiden Absorptionsschicht 28a, 28b sind in Längsrichtung der Stützelemente 31a, b zueinander versetzt angeordnet. Zusätzlich oder alternativ können die übereinander angeordneten Absorptionsschichten 28a, 28b auch zueinander verdreht sein, wobei die Absorptionsschichten 28a, 28b natürlich zueinander parallel ausgerichtet sind. Zusätzlich oder alternativ können die Absorptionsschichten 28a, 28b auch in einer Querrichtung der Stützelemente 31a, 31b zueinander versetzt sein.

Das aus den Absorptionsschichten 28a, 28b gebildete Absorptionselement 32 kann mehrere Absorptionsschichten 28a, 28b aufweisen, welche übereinander angeordnet sind. Es sind hier lediglich zwei Absorptionsschichten 28a, 28b gezeigt, weil diese beiden Absorptionsschichten 28a, 28b die anderen verdecken können, wenn die mehreren Absorptionsschichten 28 alternierend versetzt zueinander angeordnet sind.

Die Absorptionsschichten 28a, 28b weisen wieder Hohlräume 29a, 29b und Vernetzungspunkte 30a, 30b auf. Zu beachten ist, dass die Merkmale der ersten Absorptionsschicht 28a den Bezugszeichenzusatz "a" und die Merkmale der zweiten Absorptionsschicht 28b den Bezugszeichenzusatz "b" aufweisen. So gehört der Hohlraum 29a, der Vernetzungspunkt 30a sowie das Stützelement 31a zur ersten Absorptionsschicht 28a und der Hohlraum 29b, der Vernetzungspunkt 30b sowie das Stützelement 31b zur zweiten Absorptionsschicht 28b.

Gemäß dem vorliegenden Ausführungsbeispiel sind die zumindest beiden Absorptionsschichten 28a, 28b derart übereinander angeordnet bzw. zueinander versetzt, dass ein Hohlraum 29a der ersten Absorptionsschicht 28a über (oder unter) einem Vernetzungspunkt 30b der zweiten Absorptionsschicht 28b angeordnet ist. Ferner ist klar, dass somit auch ein Vernetzungspunkt 30a der ersten Absorptionsschicht 28a über (oder unter) einem Hohlraum 29b der zweiten Absorptionsschicht 28b ist. In einer Richtung, welche von Absorptionsschicht 28 zu Absorptionsschicht 28 führt, wechseln sich somit in diesem Ausführungsbeispiel Hohlraum 29 und Vernetzungspunkt 30 ab.

Bei einem Unfall können sich infolgedessen die Vernetzungspunkte 30 in die Hohlräume 29 drücken, so dass das Absorptionselement Energie aufnimmt und als Knautschzone dient. Die Stützelemente 31, 31b können sich dabei gegenseitig abscheren, so dass dieser Vorgang ebenfalls Energie aufnimmt.

Die Stützelemente 31 können aus einem Schaumstoff und/oder aus Kork ausgebildet sein.

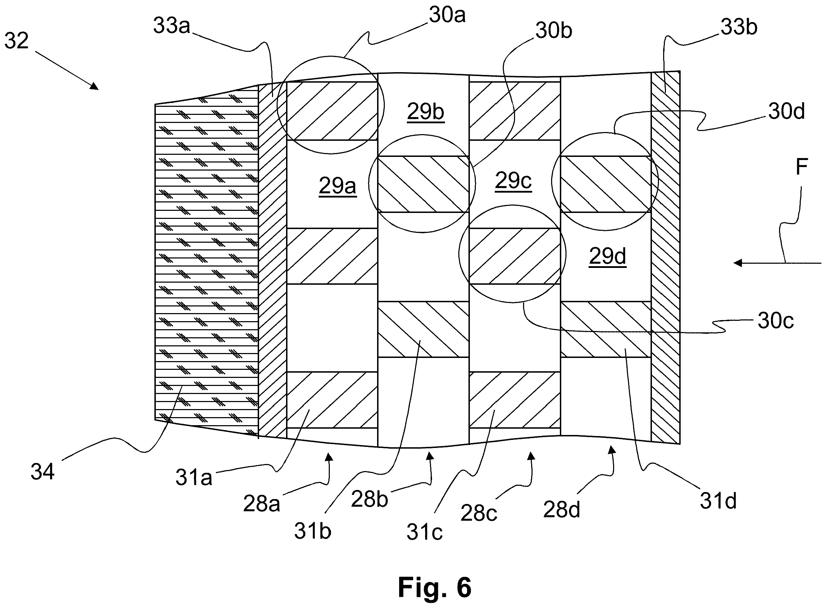

Figur 6 zeigt eine Schnittansicht durch das Absorptionselement 32 mit weiteren Schichten. Die hier geschnitten gezeigten vier Absorptionsschichten 28a - d können beispielsweise entlang der Schnittebene A - A der Figur 5 geschnitten sein, wobei in Figur 5 lediglich zwei Absorptionsschichten 28a, b zumindest zu sehen sind. Merkmale, welche bereits in der vorgegangenen Figur beschrieben sind, werden der Einfachheit halber nicht nochmals erklärt. Ferner können Merkmale auch erst in nachfolgenden Figuren beschrieben werden. Des Weiteren werden der Einfachheit halber für gleiche Merkmal gleiche Bezugszeichen verwendet. Außerdem können der Übersichtlichkeit halber nicht mehr alle Merkmale in den folgenden Figuren gezeigt sein. Es können jedoch in einer oder mehreren der vorangegangenen Figuren gezeigte Merkmale auch in einer oder mehreren der nachfolgenden Figuren vorhanden sein. Ferner können der Übersichtlichkeit halber Merkmale auch erst in einer oder mehreren der nachfolgenden Figuren gezeigt sein. Nichtsdestotrotz können Merkmale, welche erst in einer oder mehreren der nachfolgenden Figuren gezeigt sind, auch bereits in einer vorangegangenen Figur vorhanden sein.

Die Absorptionsschichten 28a - d sind wieder übereinander angeordnet. Wie zu sehen ist, sind die erste und dritte Absorptionsschicht 28a, c sowie die zweite und vierte Absorptionsschicht 28b, d deckungsgleich angeordnet.

Die Schnittebene A - A der Figur 5 ist so gelegt, dass gut zu erkennen ist, dass ein Vernetzungspunkt 30a, 30b über bzw. unter einem Hohlraum 29a, 29b angeordnet ist.

Die Positionsbezeichnungen "über" und "unter" der Figur 6 sowie auch der Figur 5 ergeben sich bei Betrachtung einer Kraft F. Die Kraft F wird bei einem Unfall durch einen Aufprall ausgebildet. Die Absorptionsschichten 28a - d sind in Richtung der Kraft F übereinander angeordnet. Beispielsweise ist die Kraft F bei einem Seitenaufprall bei einem Unfall von der Seite auf den Kindersitz 1 gerichtet. Beispielsweise fährt ein anderes Auto in die Seite des Autos, in dem der Kindersitz 1 ist. Vorteilhafterweise ist das Absorptionselement 32 infolgedessen an der Seite des Kindersitzes 1 angeordnet.

Das hier gezeigte Absorptionselement 32 kann gut die hier gezeigte Kraft F aufnehmen, da, wie bereits zur Figur 5 beschreiben ist, die Absorptionsschichten 28a - d ineinander rutschen können. Dies erfolgt dadurch, dass die Vernetzungspunkte 30a - d in die darüber bzw. darunter angeordneten Hohlräume 29a - d eindringen. Die Stützelemente 31a - 31d können dabei abscheren, so dass das Absorptionselement 32 dabei zerstört werden kann. Dazu ist es vorteilhaft, wenn das zumindest eine Absorptionselement 32 des Kindersitzes 1 austauschbar ist.

Das Absorptionselement 32 kann ferner zumindest eine Stabilisierungsschicht 33a, 33b aufweisen, wobei in dem hier gezeigten Ausführungsbeispiel des Absorptionselements 32 zwei Stabilisierungsschichten 33a, 33b gezeigt sind. Die beiden Stabilisierungsschichten 33a, 33b sind an beiden Seiten der Absorptionsschichten 28a - d angeordnet. Die Stabilisierungsschichten 33a, 33b und die Absorptionsschichten 28a - d bilden somit eine Sandwichstruktur. Mittels den Stabilisierungsschichten 33a, 33b können die Absorptionsschichten 28a - d stabilisiert bzw. aufgenommen werden. Die zumindest eine Stabilisierungsschicht 33a, 33b kann beispielsweise aus Holz und/oder Holzfurnier ausgebildet sein.

Ferner weist das hier gezeigte Ausführungsbeispiel auf einer Stabilisierungsschicht 33a eine Korkschicht 34 bzw. eine Schicht 34 aus Kork auf. Dadurch ist das Absorptionselement 32 an dieser Seite weicher ausgebildet, so dass sich das Kind nicht daran verletzten kann, wenn es beispielsweise daran hängen bleibt.

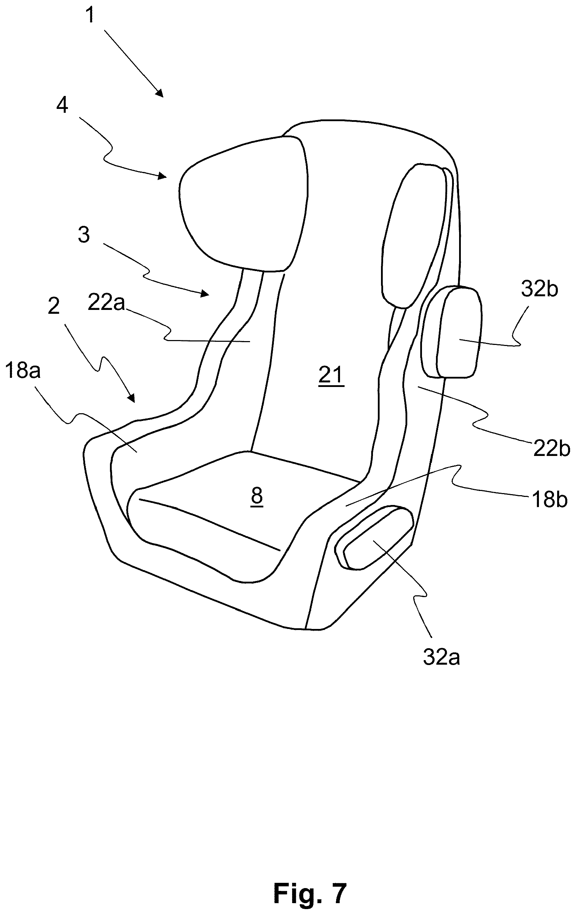

Figur 7 zeigt ein weiteres Ausführungsbeispiel des Kindersitzes 1 mit Absorptionselementen 32a, 32b in einer schematischen, perspektivischen Ansicht.

Des Weiteren werden der Einfachheit halber für gleiche Merkmal gleiche Bezugszeichen verwendet. Außerdem können der Übersichtlichkeit halber nicht mehr alle Merkmale in den folgenden Figuren gezeigt sein. Es können jedoch in einer oder mehreren der vorangegangenen Figuren gezeigte Merkmale auch in einer oder mehreren der nachfolgenden Figuren vorhanden sein. Ferner können der Übersichtlichkeit halber Merkmale auch erst in einer oder mehreren der nachfolgenden Figuren gezeigt sein. Nichtsdestotrotz können Merkmale, welche erst in einer oder mehreren der nachfolgenden Figuren gezeigt sind, auch bereits in einer vorangegangenen Figur vorhanden sein.

Der hier gezeigte Kindersitz 1 ist einteilig ausgebildet. Das heißt, Sitzteil 2, Rückenteil 3 und Kopfteil 4 sind einteilig ausgebildet. Der Kindersitz 1 kann aber auch gemäß Figur 1 ausgebildet sein. Alternativ können auch lediglich das Rückenteil 3 und das Kopfteil 4 oder das Sitzteil 2 und das Rückenteil 3 einteilig miteinander ausgebildet sein.

Gemäß dem vorliegenden Ausführungsbeispiel weist der Kindersitz 1 mehrere Absorptionselemente 32a, 32b auf. Hier sind die Absorptionselemente 32a, 32b seitlich am Kindersitz 1 angeordnet, so dass ein seitlicher Aufprall abgefedert werden kann. Gemäß dem vorliegenden Ausführungsbeispiel ist ein erstes Absorptionselement 32a an der Seitenführung 18b des Sitzteils 2 und ein zweites Absorptionselement 32b an der Seitenführung 22b des Rückenteils 2 angeordnet. Die Absorptionselemente 32a, 32b können nahezu beliebig am Kindersitz 1 angeordnet werden, um Aufprälle aus verschiedenen Richtungen abfedern zu können. Beispielsweise können Absorptionselemente 32 auch an der hier verdeckten Rückseite 20 (siehe Figur 3) angeordnet sein. Ferner sind die Absorptionselemente 32a, 32b im hier gezeigte Ausführungsbeispiel an dem Kindersitz 1 angeordnet und können ferner austauschbar oder abnehmbar sein. Zusätzlich oder alternativ kann zumindest ein Absorptionselement 32 auch in einer Seitenführung 18a, 18b oder in beiden Seitenführungen 18a, 18b des Sitzteils 2 und/oder in einer Seitenführung 22a, 2b oder in beiden Seitenführungen 22a, 22b des Rückenteils 3 angeordnet bzw. integriert sein. Zusätzlich oder alternativ kann zumindest Absorptionselement 32 auch im Bereich des Kopfteils 4 angeordnet und/oder im Kopfteil 4 integriert sein.

Zusätzlich oder alternativ kann auch eine der beiden Seitenführungen 18a, 18b oder beide Seitenführungen 18a, 18b des Sitzteils 2 und/oder eine der beiden Seitenführungen 22a, 22b oder beide Seitenführungen 22a, 22b des Rückenteils 3 aus der Struktur der Absorptionselemente 32 (vgl. Figur 4 - 6), insbesondere mit den Absorptionsschichten 28, ausgebildet sein.

Die hier gezeigten Absorptionselemente 32a, 32b sind kissen- bzw. polsterförmig.

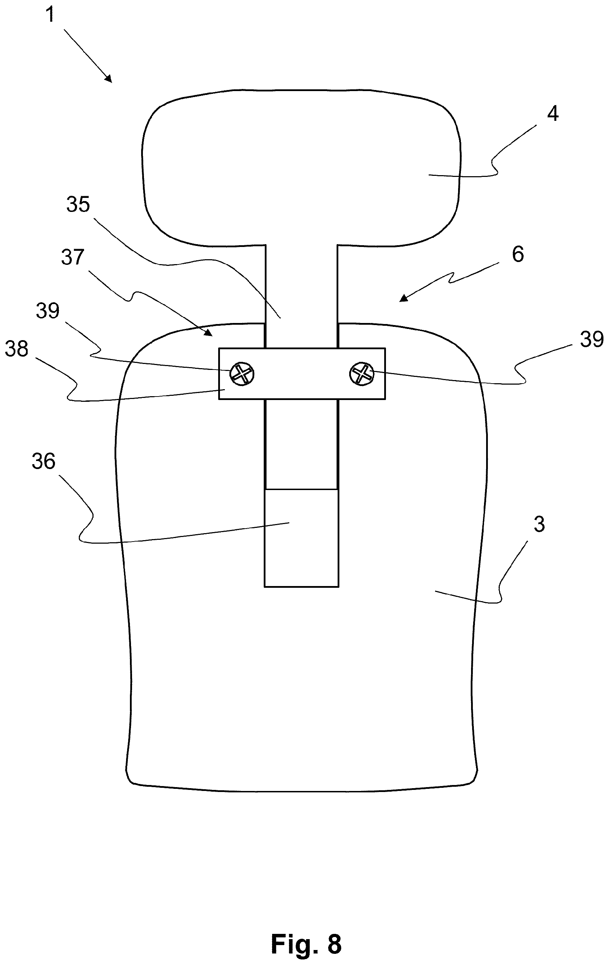

Figur 8 zeigt eine Rückansicht des Kindersitzes 1 mit der Schiebeverbindung 6.

Merkmale, welche bereits in der vorgegangenen Figur beschrieben sind, werden der Einfachheit halber nicht nochmals erklärt. Ferner können Merkmale auch erst in nachfolgenden Figuren beschrieben werden. Des Weiteren werden der Einfachheit halber für gleiche Merkmal gleiche Bezugszeichen verwendet. Außerdem können der Übersichtlichkeit halber nicht mehr alle Merkmale in den folgenden Figuren gezeigt sein. Es können jedoch in einer oder mehreren der vorangegangenen Figuren gezeigte Merkmale auch in einer oder mehreren der nachfolgenden Figuren vorhanden sein. Ferner können der Übersichtlichkeit halber Merkmale auch erst in einer oder mehreren der nachfolgenden Figuren gezeigt sein. Nichtsdestotrotz können Merkmale, welche erst in einer oder mehreren der nachfolgenden Figuren gezeigt sind, auch bereits in einer vorangegangenen Figur vorhanden sein.

Der Einfachheit halber sind hier lediglich das Rückenteil 3 und das Kopfteil 4 gezeigt, wobei mittels der Schiebeverbindung 6 das Kopfteil 4 gegenüber dem Rückenteil 3 verschoben werden kann, so dass der Kindersitz 1 auf Kinder mit unterschiedlichen Körpergrößen eingestellt werden kann.

Die Schiebeverbindung 6 umfasst gemäß dem vorliegenden Ausführungsbeispiel eine Schiene 35, welche in einer Führung 36 geführt ist. Die Schiene 35 ist hier Teil des Kopfteils 4 und die Führung 36 ist Teil des Rückenteils 3. Die Schiene 35 kann in der Führung 36 verschoben werden, so dass das Kopfteil 4 gegenüber dem Rückenteil 3 verschoben werden kann.

Ferner weist der Kindersitz 1 gemäß dem vorliegenden Ausführungsbeispiel eine Klemmvorrichtung 37 auf, mittels der die Schiene 35 festgeklemmt werden kann, so dass die Schiene 35 gegenüber der Führung 36 fixierbar ist. Die Klemmvorrichtung 37 weist ferner Befestigungsmittel 39 auf, welche hier als Schrauben ausgebildet sind. Mittels der Befestigungsmittel 39 kann ein Klemmelement 38 der Klemmvorrichtung 37 auf die Schiene 35 gepresst werden. Die Schiene 35 ist infolgedessen im vorliegenden Ausführungsbeispiel zwischen Rückenteil 3 und Klemmelement 38 eingeklemmt.

Die Klemmvorrichtung 37 kann dabei auch derart ausgebildet sein, dass die Schiene 35 derart festgeklemmt ist, dass sie sich von alleine nicht bewegt, jedoch mittels Krafteinwirkung verschoben werden kann. Dies hat den Vorteil, dass die Befestigungsmittel 39 nicht gelöst werden müssen, um das Kopfteil 4 gegenüber dem Rückenteil 3 zu verschieben. Es reicht beispielsweise ein kräftiges Ziehen am Kopfteil 4, so dass die Schiene 35 unter der Klemmvorrichtung 37 durchgezogen wird.

Zusätzlich oder alternativ kann auch die Klemmvorrichtung 37 am Kopfteil 4 angeordnet sein. Weiterhin zusätzlich oder alternativ kann auch die Führung 36 am Kopfteil 4 angeordnet sein. Im Prinzip kann somit die Schiebeverbindung 6 auch so ausgebildet sein, dass die Klemmvorrichtung 37 und/oder die Führung 36 am Kopfteil 4 ist.

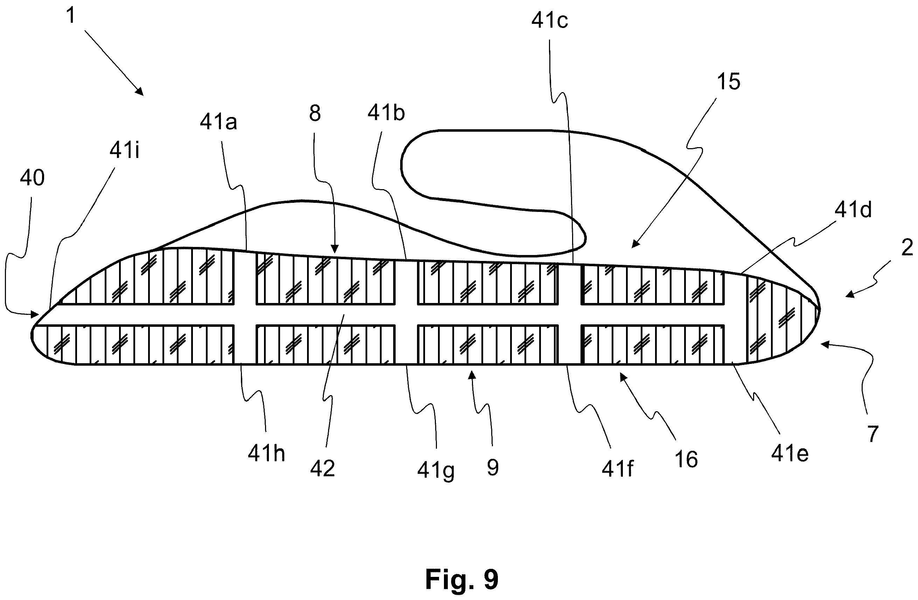

Figur 9 zeigt eine Schnittansicht des Kindersitzes 1 mit einer Lüftung 40. Die Lüftung 40 ist hier eine passive Lüftung, d.h. ohne Ventilator oder ähnliches. Nichtsdestotrotz könnte auch ein Ventilator vorhanden sein.

Merkmale, welche bereits in der vorgegangenen Figur beschrieben sind, werden der Einfachheit halber nicht nochmals erklärt. Ferner können Merkmale auch erst in nachfolgenden Figuren beschrieben werden. Des Weiteren werden der Einfachheit halber für gleiche Merkmal gleiche Bezugszeichen verwendet. Außerdem können der Übersichtlichkeit halber nicht mehr alle Merkmale in den folgenden Figuren gezeigt sein. Es können jedoch in einer oder mehreren der vorangegangenen Figuren gezeigte Merkmale auch in einer oder mehreren der nachfolgenden Figuren vorhanden sein. Ferner können der Übersichtlichkeit halber Merkmale auch erst in einer oder mehreren der nachfolgenden Figuren gezeigt sein. Nichtsdestotrotz können Merkmale, welche erst in einer oder mehreren der nachfolgenden Figuren gezeigt sind, auch bereits in einer vorangegangenen Figur vorhanden sein.

Die Lüftung 40 ist ferner am Sitzteil 2 gezeigt. Die Lüftung 40 kann zusätzlich oder alternativ auch am Rückenteil 3 und/oder am Kopfteil 4 angeordnet sein.

Die Lüftung 40 umfasst eine Vielzahl an Lüftungsöffnungen 41a - 41i, wobei ein Teil der Lüftungsöffnungen 41a - 41d über die Sitzfläche 8 und der Innenseite 15 verteilt angeordnet sind. Zusätzlich sind gemäß dem vorliegenden Ausführungsbeispiel weitere Lüftungsöffnungen 41e - 41h an der Außenseite 16 bzw. der hier gezeigten Unterseite 9 angeordnet. Die Lüftungsöffnungen 41a - 41i sind außerdem gemäß dem vorliegenden Ausführungsbeispiel mittels zumindest einem Lüftungskanal 42 miteinander verbunden, so dass Luft zirkulieren kann.

Die Lüftungsöffnung 41i ist an einer Stirnseite des Kindersitzes 1 angeordnet.

Die Lüftungsöffnungen 41a - 41i und/oder der Lüftungskanal 42 kann beispielsweise mittels einer Bohrung ausgebildet sein.

Der Lüftungskanal 42 erstreckt sich somit durch den Kern 7 aus Kork.

Der zumindest eine Sitzkörper 2, 3, 4 kann des Weiteren mit einem Überzug überzogen sein.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Kindersitz
- 2: Sitzteil
- 3: Rückenteil
- 4: Kopfteil
- 5: Gelenkverbindung
- 6: Schiebeverbindung
- 7: Kern des Sitzteils
- 8: Sitzfläche
- 9: Unterseite
- 10: Trägerschicht
- 11: erste Korkschicht
- 12: zweite Korkschicht
- 13: dritte Korkschicht
- 14: Sitzschicht
- 15: Innenseite
- 16: Außenseite
- 17: Außenschicht
- 18: Seitenführung des Sitzteils
- 19: Aussparung
- 20: Rückseite
- 21: Rückenfläche
- 22: Seitenführung des Rückenteils
- 23: Kern des Rückenteils
- 24: Trägerschicht
- 25: Korkschicht
- 26: Rückenschicht
- 27: Außenschicht
- 28: Absorptionsschicht
- 29: Hohlraum
- 30: Vernetzungspunkt
31 Stützelement
32 Absorptionselement
33 Stabilisierungsschicht
34 Korkschicht
35 Schiene
36 Führung
37 Klemmvorrichtung
38 Klemmelement
39 Befestigungsmittel
40 Lüftung
41 Lüftungsöffnung
42 Lüftungskanal
A-A Schnittebene
F Kraft

## Patentansprüche

1. Kindersitz (1) für ein Straßenfahrzeug
mit zumindest einem Sitzkörper (2, 3, 4),
**dadurch gekennzeichnet,**
**dass** zumindest ein Kern (7, 23) des zumindest einen Sitzkörpers (2, 3, 4) aus Kork ausgebildet ist.

2. Kindersitz nach dem vorherigen Anspruch, **dadurch gekennzeichnet, dass** der zumindest eine Sitzkörper (2, 3, 4) ein Sitzteil (2), ein Rückenteil (3) und/oder ein Kopfteil (4) ist, welche vorzugsweise gegeneinander verschiebbar und/oder schwenkbar miteinander verbunden sind, und/oder
dass der zumindest eine Sitzkörper (2, 3, 4) eine Sitzschale ist.

3. Kindersitz nach einem oder mehreren der vorherigen Ansprüche,
**dadurch gekennzeichnet, dass** der zumindest eine Sitzkörper (2, 3, 4) zumindest eine Trägerstruktur, insbesondere eine Trägerschicht (10), aufweist, an dem der Kern (7, 23) aus Kork angeordnet ist, wobei die Trägerstruktur vorzugsweise aus Holz und/oder einem Holzfurnier ausgebildet ist.

4. Kindersitz nach einem oder mehreren der vorherigen Ansprüche,
**dadurch gekennzeichnet, dass** der Kern (7, 23) aus Kork aus zumindest einer Korkschicht (11, 12, 13, 25) ausgebildet ist, welche vorzugsweise, an der Trägerstruktur, insbesondere beidseitig an der Trägerschicht (10), angeordnet ist.

5. Kindersitz nach einem oder mehreren der vorherigen Ansprüche,
**dadurch gekennzeichnet, dass** der zumindest eine Sitzkörper (2, 3, 4), insbesondere das Sitzteil (2), das Rückenteil (3) und/oder das Kopfteil (4), vorzugsweise die zumindest eine Korkschicht (11, 12, 13, 25) und/oder die zumindest eine Trägerstruktur, insbesondere die zumindest eine Trägerschicht (10), ein Vollmaterial ist.

6. Kindersitz nach einem oder mehreren der vorherigen Ansprüche,
**dadurch gekennzeichnet, dass** eine Innenseite (15) des Kindersitzes (1) zumindest teilweise mit einer Sitzschicht (14) verkleidet ist, welche vorzugsweise aus Kork ist, und/oder
dass eine Außenseite (16) des Kindersitzes (1) zumindest abschnittsweise, insbesondere vollständig, mit einer Außenschicht (17) verkleidet ist, wobei die Außenschicht (17) vorzugsweise aus Holz und/oder Holzfurnier ausgebildet ist.

7. Kindersitz nach einem oder mehreren der vorherigen Ansprüche,
**dadurch gekennzeichnet,**
**dass** die Außenschicht (17) eine Dicke von 0,5 mm bis 3 mm aufweist, dass die zumindest eine Korkschicht (11, 12, 13, 25) eine Dicke von 3 mm bis 20 mm aufweist und/oder
**dass** die zumindest eine Trägerschicht (10) eine Dicke von 1 mm bis 4 mm aufweist.

8. Kindersitz nach einem oder mehreren der vorherigen Ansprüche,
**dadurch gekennzeichnet, dass** eine Außenfläche, insbesondere die Sitzschicht (14), die Rückenschicht (26) und/oder die Außenschicht (27), des Kindersitzes (1) zumindest abschnittsweise mit einer Versiegelung, insbesondere Wachs und/oder einem Fett, versiegelt ist.

9. Kindersitz nach einem oder mehreren der vorherigen Ansprüche,
**dadurch gekennzeichnet, dass** der Kindersitz (1) zumindest ein Absorptionselement (32) aufweist, wobei das Absorptionselement (32) an dem zumindest einen Sitzkörper (2, 3, 4) angeordnet ist,
wobei der zumindest eine Sitzkörper (2, 3, 4) zumindest bereichsweise aus dem zumindest einen Absorptionselement (32) ausgebildet ist und/oder wobei das Absorptionselement (32) in dem zumindest einem Sitzkörper (2, 3, 4) integriert ist.

10. Kindersitz nach einem oder mehreren der vorherigen Ansprüche,
**dadurch gekennzeichnet, dass** das zumindest eine Absorptionselement (32) eine Gitterstruktur und/oder zumindest eine Absorptionsschicht (28) aufweist.

11. Kindersitz nach einem oder mehreren der vorherigen Ansprüche,
**dadurch gekennzeichnet, dass** mehrere Absorptionsschichten (28) übereinander angeordnet sind, wobei die jeweiligen übereinander angeordneten Absorptionsschichten (28) zueinander versetzt angeordnet sind, so dass über einem Hohlraum (29) einer Absorptionsschicht (28) ein Vernetzungspunkt (30) einer darüber liegenden Absorptionsschicht (28) angeordnet ist.

12. Kindersitz nach einem oder mehreren der vorherigen Ansprüche,
**dadurch gekennzeichnet, dass** das Absorptionselement (32), insbesondere die zumindest eine Absorptionsschicht (28), an einer ersten und/oder zweiten Seite eine Stabilisierungsschicht (33) aufweist, welche vorzugsweise aus Holz und/oder Holzfurnier ausgebildet ist.

13. Kindersitz nach einem oder mehreren der vorherigen Ansprüche,
**dadurch gekennzeichnet, dass** der Kindersitz (1) an der Außenseite (16) und/oder an einer Innenseite (15), insbesondere zumindest im Bereich des zumindest einen Absorptionselements (32), zumindest eine Lüftungsöffnung aufweist.

14. Kindersitz nach einem oder mehreren der vorherigen Ansprüche,
**dadurch gekennzeichnet, dass** der Kindersitz (1) ein Befestigungsmittel aufweist, mittels dem der zumindest eine Sitzkörper (2, 3, 4) im Straßenfahrzeug befestigt werden kann.

15. Kindersitz nach einem oder mehreren der vorherigen Ansprüche,
**dadurch gekennzeichnet, dass** der zumindest eine Sitzkörper (2, 3, 4) gegenüber dem Befestigungsmittel drehbar ist und/oder dass der zumindest eine Sitzkörper (2, 3, 4) von dem Befestigungsmittel entkoppelbar ist.
